Europäisches Patentamt

(19) European Patent Office

Office européen des brevets

(11) Publication number: **0 027 301**
**B1**

(12) EUROPEAN PATENT SPECIFICATION

(45) Date of publication of patent specification: **25.01.84**  (51) Int. Cl.³: **A 22 C 7/00**

(21) Application number: **80200977.9**

(22) Date of filing: **14.10.80**

(54) Apparatus for flattening meat.

(30) Priority: **15.10.79 NL 7907620**

(43) Date of publication of application:
**22.04.81 Bulletin 81/16**

(45) Publication of the grant of the patent:
**25.01.84 Bulletin 84/4**

(84) Designated Contracting States:
**BE DE FR NL SE**

(56) References cited:
**DE - A - 2 638 807**
**FR - A - 2 358 107**
**US - A - 1 825 205**
**US - A - 2 528 125**
**US - A - 2 971 216**
**US - A - 3 234 589**
**US - A - 3 413 681**

(73) Proprietor: **Europack Machinery Holland B.V.**
**Asveldweg 16**
**NL-7556 BP  Hengelo (O) (NL)**

(72) Inventor: **de Jong, Gerrit**
**No. 6, Westermaatsweg**
**NL-7556 BT Hengelo (NL)**
Inventor: **Slettenhaar, Derk Franz**
**No. 33, Bornerbroeksestraat**
**NL-7621 AD Borne (NL)**

(74) Representative: **Schumann, Bernard Herman Johan**
**et al,**
**OCTROOIBUREAU ARNOLD & SIEDSMA**
**Sweelinckplein 1**
**NL-2517 GK The Hague (NL)**

Apparatus for flattening meat

The invention relates to a device for flattening meat comprising a frame, a flat table supported therein and a hammer plate adapted to be driven in an oscillatory movement towards and away from said table and having a surface facing the table, the device further comprising two synchronously drivable conveyor belts, the upper run of the lower belt being guided across the table and the lower run of the upper belt parallel to the former being guided across the lower side of the hammer plate.

Such a device is known from U.S. Patent Specification 3 234 589. The device according to this prior art reference comprises hammer means adapted to perform an upward and downward oscillatory movement in such a way that a corresponding repeated stretching and relaxation of the upper conveyor belt takes place. In order for the upper conveyor belt not to age too quickly the stroke of the hammer means has necessarily to be kept relatively small. It will be clear that this affects the efficiency of the flattening operation.

It is the purpose of this invention to provide a device in which the problems of the prior art are not inherent. In view thereof the invention provides a device of the type mentioned in the preamble, in which the upper conveyor belt passes around reversing rollers whose bearings are rigidly secured to said hammer plate.

For flattening the meat to different thicknesses preferably the table is adjustable in the frame towards and away from the hammer plate. In a simple and highly reliable embodiment the table is supported by means of extensions on supporting elements fastened in the frame, between which extensions and supporting elements supporting faces are all sloping in the same direction at the same angle of inclination and in that by means of a setting device the table is displaceable in the direction of the inclination in the frame.

Preferably, the operative surface of the table has on the supply side a lowered part which smoothly joins the non-lowered part on the discharge side. It is thus ensured that the meat is subjected to a more gradual treatment, which is conducive to the quality of the treated meat.

In order to reduce the power required for driving and to avoid excessive wear the conveyor belts can, preferably, only be driven when they are moved away from one another. This can be achieved in a very simple embodiment when a reversing roller of the two conveyor belts is coupled with a pulley, along each of which is passed a common rope stretched by a spring-loaded stretching device whilst one of the reversing rollers of the upper conveyor belt is coupled with a roller, into the upper part of whose path of movement protrudes a resiliently suspended, continuously drivable wheel. Said wheel can be driven together with the device moving the mass up and down by a common motor.

The invention will be described with reference to a drawing showing two embodiments. Herein show:

Fig. 1 a vertical, longitudinal sectional view of a device in accordance with the invention;

Fig. 2 a cross-sectional view taken on the line II—II in fig. 1;

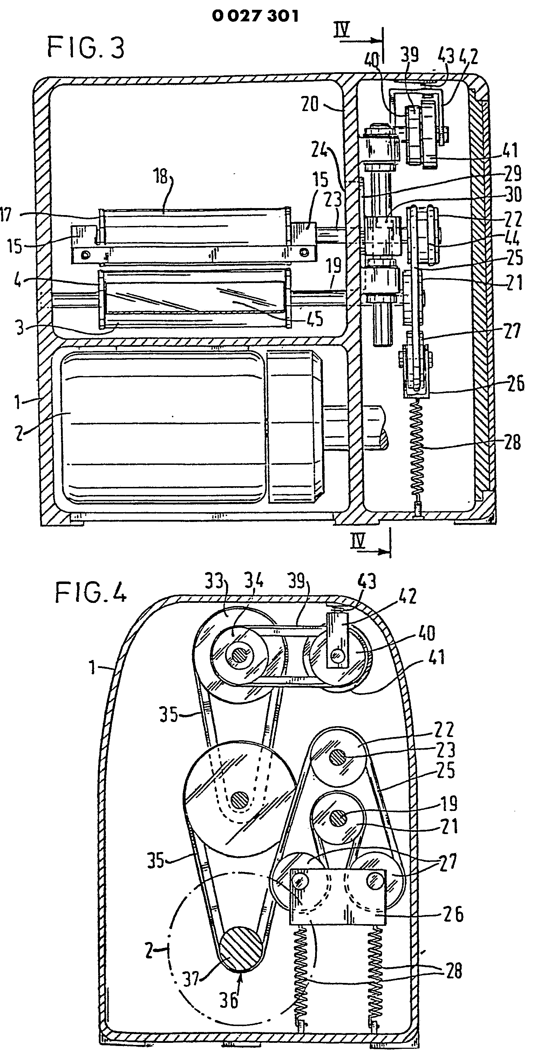

Fig. 3 a cross-sectional view taken on the line III—III;

Fig. 4 a vertical, longitudinal sectional view taken on the line IV—IV in fig. 2 and fig. 3; and

Fig. 5 a vertical, longitudinal sectional view of a variant of the device shown in fig. 1.

In the drawing corresponding elements are designated by the same reference numerals.

The figures show a housing 1 serving as a frame, which is divided into three compartments:

— a motor compartment on the lower side for the driving motor 2;

— a transmission compartment on one side for the transmission gears;

— a processing compartment in which the meat is treated above the motor compartment.

The processing compartment accommodates a lower conveyor belt 3, whose driven reversing roller 4 is located inside said compartment and whose freely rotatable reversing roller 5 is located on an extension arm 6 arranged outside said compartment. Beneath the upper run 7 of said conveyor belt is arranged a supporting table 8. On both sides the table 8 has extensions 9 inclined in the same direction and bearing on correspondingly inclined supporting elements 10 in the frame 1. The table 8 is displaceable in the direction of the slope with the aid of a setting device formed by a pin 12 provided with a transverse extension 11, which is displaceable by means of a rotatable groove disc 13 in the direction of said slope. Owing to the sloping supporting faces the table is additionally displaced in a direction of height when it is displaced laterally.

Above the table 8 is located a hammer plate 14 having a flat bottom surface and carrying bearing plates 15, in which two parallel reversing rollers 16, 17 for the upper conveyor belt 18 are journalled. The lower run of this conveyor belt travels along the flat bottom surface of the hammer plate 14. The shaft 19 of the driven reversing roller 4 is passed through the wall 20 between the processing compartment and the transmission compartment and is provided at this place with a pulley 21. The shaft 23 of the reversing roller 17 is passed through a vertical slot 24 in the partition 20 and provided at the free end with a pulley 22 of the same size as the pulley 21. Along the top sides of said pulleys 21, 22 is passed a rope 25, which is stretched by being additionally passed along the lower sides of two stretching discs 27 journalled in a common, loose yoke 26. The yoke is loaded in downward direction by tensile springs 28. The slot 24 in the partition 20 is closed by a loose covering plate 29, to which is fastened a bearing bushing 30 surrounding the shaft 23.

The hammer plate 14, which is freely movable in a vertical sense, is connected on both sides with two crank rods 31 engaging a crank shaft 32 journalled in the housing. This crank shaft carries a pulley 33 for a belt and a pulley 34 for a rope. The belt pulley is connected by a reducing belt transmission 35 with a belt pulley 36 on the driving shaft 37 of the motor 2, to which is furthermore fastened a fly-wheel 38. The rope pulley 34 drives by a rope 39 a rope pulley 40 of the same size, which is rigidly secured to a driving wheel 41 and journalled in loose yoke 42, which is loaded in downward direction by a compression spring 43. The driving wheel 41 is located in the upper part of the path described by the rubber ring 44 arranged on the rope pulley 22 and located in a second groove of said pulley 22. As a result this pulley 22 will be driven by the driving wheel 41 as soon as the hammer plate 14, the reversing roller 16, 17 connected herewith and the pulley 22 are substantially in the upper position owing to the rotation of the crank shaft 31. Consequently the two conveyor belts 3, 18 will only be driven and stand still when they are near one another.

Pieces of meat deposited on the upper run 7 of the lower conveyor belt 3 are conveyed in the direction and flattened to a thickness adjustable by means of the groove disc 13 and conducted away along a catching knife 45 bearing on the lower conveyor belt 3 through an opening 46 into the housing 1. The opening 46 can be closed by means of a slightly resilient flap 47 clamped tight on the top side or being pivotable on said side.

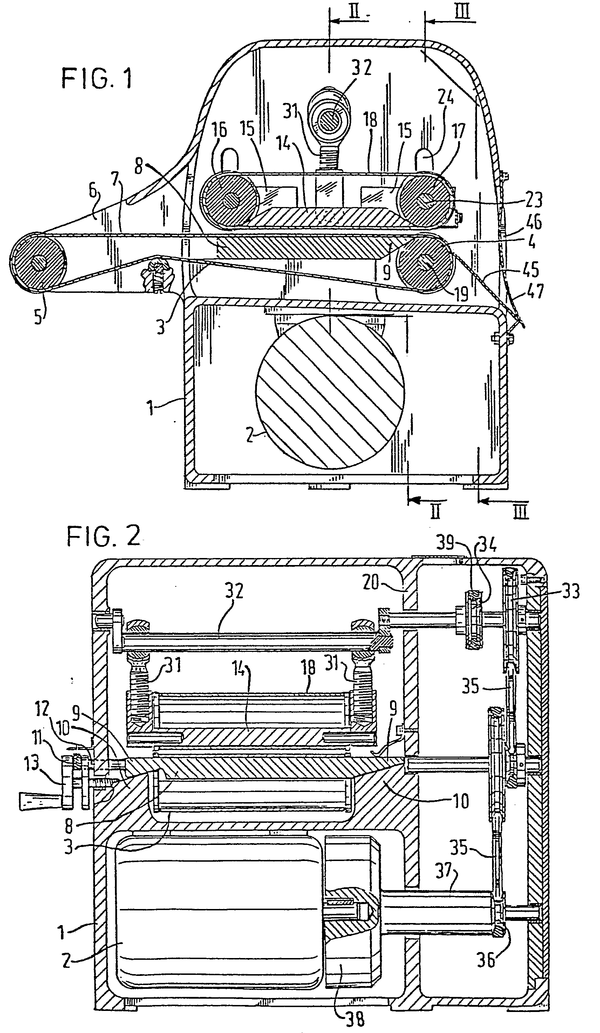

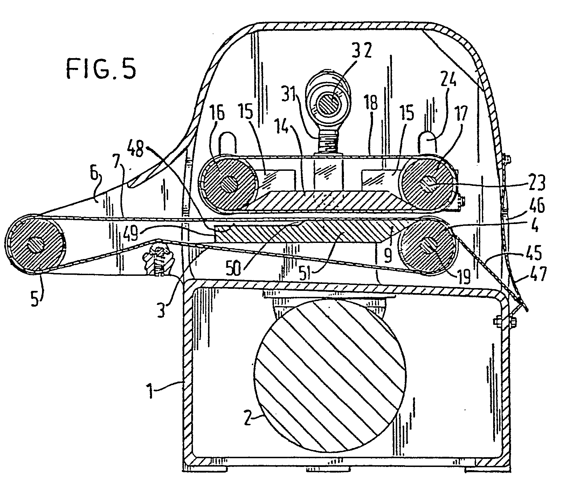

Fig. 5 shows a preferred embodiment of the device according to the invention. This embodiment is for the major part identical to the embodiment of fig. 1. The essential difference resides in the presence of a lowered part 48 of the operative top surface of the table 49. The lowered part 48 joins via a sloping surface 50 the non-lowered part 51 of the top surface. This embodiment ensures that the meat is not flattened directly after the supply to its final thickness. The treatment is performed in two phases. It appears that this more gradual treatment is conducive to the quality.

## Claims

1. A device for flattening meat comprising a frame, a flat table (8) supported therein and a hammer plate (14) adapted to be driven in an oscillatory movement towards and away from said table and having a surface facing the table, the device further comprising two synchronously drivable conveyor belts (3, 18), the upper run (7) of the lower belt (3) being guided across the table (8) and the lower run of the upper belt parallel to the former being guided across the lower side of the hammer plate (14), characterized in that the upper conveyor belt (18) passes around reversing rollers (16, 17) whose bearings (15) are rigidly secured to said hammer plate (14).

2. A device as claimed in claim 1, characterized in that the table (8) is adjustable in the frame (1) towards and away from the hammer plate (14).

3. A device as claimed in claim 2, characterized in that the table (8) is supported by means of extensions on supporting elements (10) fastened in the frame (1), between which extensions and supporting elements supporting faces are all sloping in the same direction at the same angle of inclination and in that by means of a setting device (11—13) the table is displaceable in the direction of the inclination in the frame.

4. A device as claimed in anyone of the preceding claims, characterized in that the operative surface of the table (8) has a lowered part (48) on the supply side.

5. A device as claimed in claim 1, characterized in that the conveyor belts can only be driven when they have moved away from one another.

6. A device as claimed in claim 5, characterized in that a reversing roller (16, 17) of the two conveyor belts (3, 18) is coupled with a pulley (21, 22), along each of which is passed a common rope (25) stretched by a spring-loaded (28) stretching device (26, 27) and in that one of the reversing rollers (17) of the upper conveyor belt (18) is coupled with a roller (44), into the upper part of whose path of movement protrudes a resiliently suspended, continuously drivable wheel (41).

## Patentansprüche

1. Vorrichtung zum Plattdrücken von Fleisch mit einem Rahmen, einem darin angeordneten Tisch (8) und einer Hammerplatte (14), die zum Tisch hin- und herbewegt werden kann und eine zum Tisch hin gerichtete Oberfläche aufweist und die weiterhin zwei synchron antreibbare Förderbänder (3, 18) aufweist, von denen das obere Trum (7) des unteren Förderbandes (3) über den Tisch (8) hinweg geführt wird und das untere Trum des oberen Förderbandes (18) parallel zum ersteren quer über die untere Seite der Hammerplatte (14) geführt wird, dadurch gekennzeichnet, daß das obere Förderband (18) um Umkehrrollen (16, 17) läuft, deren Lager (15) fest an der Hammerplatte (14) angeordnet sind.

2. Vorrichtung nach Anspruch 1, dadurch gekennzeichnet, daß der Tisch (8) im Rahmen (1) in Richtung auf die Hammerplatte (14) verstellbar ist.

3. Vorrichtung nach Anspruch 2, dadurch gekennzeichnet, daß der Tisch (8) mittels Ansätzen auf im Rahmen (1) befestigten Tragegliedern (10) gelagert ist, wobei zwischen den Ansätzen und den Tragegliedern Tragflächen vorgesehen sind, die in der gleichen Richtung mit dem gleichen Böschungswinkel geneigt sind und daß der Tisch (8) mittels einer Verstellvorrichtung (11—13) in Richtung auf die Neigung des Rahmens verstellbar ist.

4. Vorrichtung nach einem der vorhergehenden Ansprüche, dadurch gekennzeichnet, daß die Arbeitsfläche des Tisches (8) an der Zuführungsseite einen abgesenkten Teil (48) aufweist.

5. Vorrichtung nach Anspruch 1, dadurch gekennzeichnet, daß die Förderbänder (3, 18) nur dann antreibbar sind, wenn sie voneinander entfernt sind.

6. Vorrichtung nach Anspruch 5, dadurch gekennzeichnet, daß eine Umkehrrolle (16, 17) der beiden Förderbänder (3, 18) mit einer Scheibenrolle (21, 22) verbunden ist, über die ein gemeinsames Treibseil (25) geführt ust, das von einer durch eine Feder (28) gespannten Streckvorrichtung (36, 27) straff gehalten wird und daß eine der Umkehrrollen (17) des oberen Förderbandes (18) mit einer Rolle (44) gekoppelt ist und in den oberen Teile der Bewegungsebene der Rolle (44) ein federnd gelagertes antreibbares Rad (41) hineinragt.

## Revendications

1. Un dispositif pour aplatir la viande, comprenant un bâti, une table plane (8) supportée dans celui-ci et un plateau de martelage (14) agencé pour être entraîné en un mouvement oscillant l'approchant et l'éloignant de la table, et ayant une surface tournée vers la table, le dispositif comprenant en outre deux courroies transporteuses (3, 18) pouvant être entraînées en synchronisation, le brin supérieur (7) de la courroie inférieure (3) étant guidé le long de la table (8) et le brin inférieur de la courroie supérieure, parallèle à celle-ci, étant guidé le long du côté inférieur du plateau de martelage (14), caractérisé en ce que la courroie transporteuse supérieure (18) passe autour de rouleaux de renvoi (16, 17) dont les paliers (15) sont rigidement fixés au plateau de martelage (14).

2. Un dispositif selon la revendication 1, caractérisé en ce que la table (8) est réglable dans le bâti (1) pour être approchée ou éloignée du plateau de martelage (14).

3. Un dispositif selon la revendication 2, caractérisé en ce que la table (8) est supportée au moyen de prolongements sur des éléments de support (10) fixés dans le bâti (1), les faces de support entre ces prolongements et éléments de support étant toutes en pente dans la même direction et ayant le même angle d'inclinaison, et en ce que la table est déplaçable dans le bâti dans la direction d'inclinaison, au moyen d'un dispositif de réglage (11, 13).

4. Un dispositif selon l'une des revendications précédentes, caractérisé en ce que la surface de travail de la table (8) présente une partie surbaissée (48) du côté de l'entrée.

5. Un dispositif selon la revendication 1, caractérisé en ce que les courroies transporteuses ne peuvent être entraînées que lorsqu'elles se sont éloignées l'une de l'autre.

6. Un dispositif selon la revendication 5, caractérisé en ce qu'un rouleau de renvoi (16, 17) des deux courroies transporteuses (3, 18) est couplé à une poulie (21, 22) et le long de chacune de celles-ci passe un câble commun (25) tendu par un dispositif de tension à ressorts (28), en ce que l'un des rouleaux de renvoi (17) de la courroie transporteuse supérieure (18) est couplée à un rouleau (44), dans la partie supérieure du trajet de déplacement duquel s'engage une roue (41) à suspension élastique, pouvant être entraînée en continu.

FIG. 1

FIG. 2

0 027 301

FIG. 3

FIG. 4

FIG.5